# EUROPEAN PATENT APPLICATION

(11) **EP 1 136 997 A2**
(43) Date of publication of application: **26.09.2001**
(21) Application number: 01302679.4
(22) Date of filing: 22.03.2001
(51) Int. Cl.: G11B 19/02, G11B 27/10, G11B 17/00

(54) **Apparatus and method for reproducing stream data and recording medium**

(30) Priority: 22.03.2000 JP 2000080303
(71) Applicant: Sony Computer Entertainment Inc., Tokyo 107-0052 (JP)
(72) Inventor: Terasaka, Isamu c/o Sony Computer Entert. Inc., Tokyo 107-0052 (JP); Yamamoto, Hiroshi c/o Sony Computer Entert. Inc., Tokyo 107-0052 (JP); Ohdaira, Toshimitsu c/o Sony Computer Entert. Inc., Tokyo 107-0052 (JP)
(74) Representative: Turner, James Arthur

(57) **Abstract**

A method of reproducing stream data according to which the synchronization between the reproduction of the stream data such. as sound data and the operation of an application can be easily achieved. Sound data is sequentially reproduced and the reproduction of the sound data is monitored. When the data has been reproduced up to a mark position (A to E) specified in an action definition file, the occurrence of the event is notified to the application.

## Description

The present invention relates to a method of reproducing stream data such as sound data.

According to conventional methods, sound data (stream data) such as PCM data is reproduced for example by sequentially transferring the sound data from a CD or the like storing the sound data to a sound reproducing processor (SPU).

The sound data thus reproduced is sequentially read from the CD or the like, and transferred as is to the SPU for performance. Therefore, data having a length corresponding to actual performance time must be stored in the CD or the like, even if the same phrase is repeated a number of times.

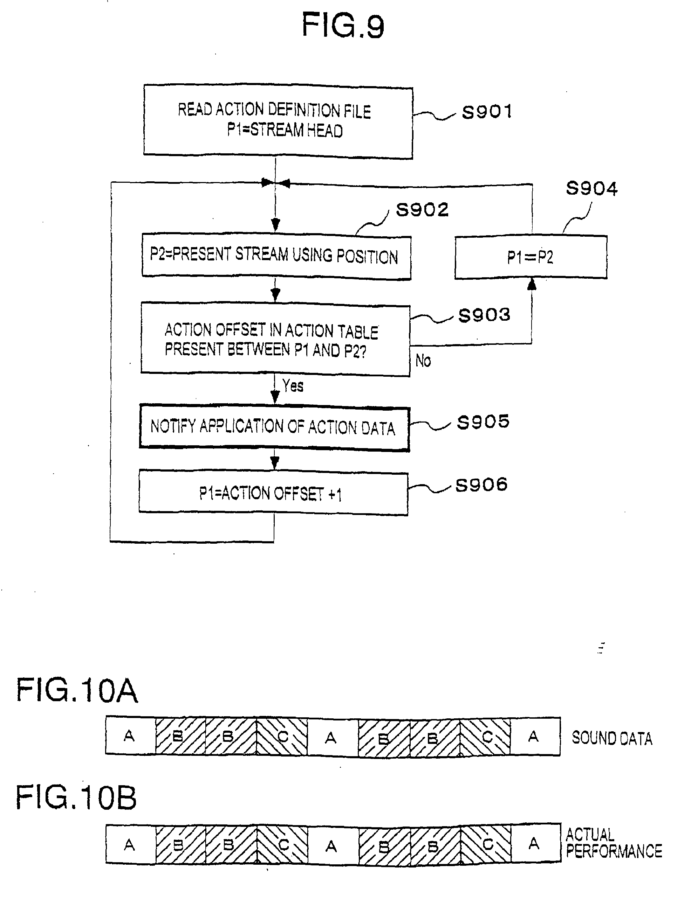

Figs. 10A and 10B are charts for use in illustration of the relation between sound data and actual performance. As shown in the figures, only three kinds of phrases "A", "B" and "C" are actually repeated in this case. However, as described above, the content of the sound data (Fig. 10A) must be in complete coincidence with the actual performance (Fig. 10B). Therefore, the size of the sound data such as PCM data having the same quality as a music CD is enabled to be significantly large.

Various respective aspects and features of the invention are defined in the appended claims.

Embodiments of the present invention can provide a technique of reproducing stream data according to which the order of reading stream data such as sound data can be controlled.

A stream data reproducing apparatus according to the present invention reads out stream data stored in a recording medium and reproduces the data. The apparatus includes a reading processing portion to read the stream data from the recording medium according to branch definition information stored in the recording medium, and a processing portion to reproduce the read out stream data.

In a method of reproducing the stream data according to the present invention, stream data stored in a recording medium is read out and reproduced. Branch definition information is read out from the recording medium, the stream data is read out from the recording medium according to the branch definition information, and the read out stream data is reproduced,

A recording medium according to the present invention is recorded with a stream data reproducing program. The stream data reproducing program includes the steps of reading out branch definition information from the recording medium, reading out stream data from the recording medium according to the branch definition information, and reproducing the read out stream data.

Another recording medium according to the present invention is recorded with stream data, branch definition information to control the order of reading the stream data, and a stream data reproducing program to read the stream data and reproduce the stream data.

Note that the program can be distributed in the form of a CD-ROM, a DVD-ROM, or a portable recording medium such as a memory card or through a network.

Furthermore, in the above case, the branch definition information has information indicating a branch position and information indicating a branch destination, and stream data may start to be read from the branch destination when the stream data has been read up to the branch position. In addition, the branch definition information may have information indicating the number of branches, and reading may be performed with the number of branches. Furthermore, the branch definition information may have information indicating whether or not to permit branching, and reading with a branch may be performed only if branching is permitted.

The invention will now be described by way of example with reference to the accompanying drawings, throughout which like parts are referred to by like references, and in which:
Fig. 1 is a block diagram showing the configuration of an entertainment system to which the present invention is applied;
Fig. 2 is a diagram generally showing how sound data reproduction is performed in the entertainment system;
Fig. 3 is a diagram showing an example of the architecture of a branch definition file;
Fig. 4 is a flow chart for use in illustration of the process flow by a reading processing portion 200;
Figs. 5A and 5B are diagrams for use in illustration of the relation between sound data and actual performance when branching is employed;
Figs. 6A to 6C are diagrams showing a case in which whether or not to branch is controlled, by way of illustration;
Fig. 7 is a diagram for use in illustration of the relation between sound data reproduction and event occurrence notification to an application;
Fig. 8 is a diagram showing an example of the architecture of an action definition file;
Fig. 9 is a flow chart for use in illustration of the flow of a sound reproduction monitoring processing; and
Figs, 10A and 10B are diagrams for use in illustration of a conventional relation between sound data and actual performance.

An embodiment of the present invention will be now described in conjunction with the accompanying drawings.

An entertainment system to which the present invention is applied will be now described. The entertainment system for example executes an application such as a game provided by a CD/DVD (or through a network) or the like.

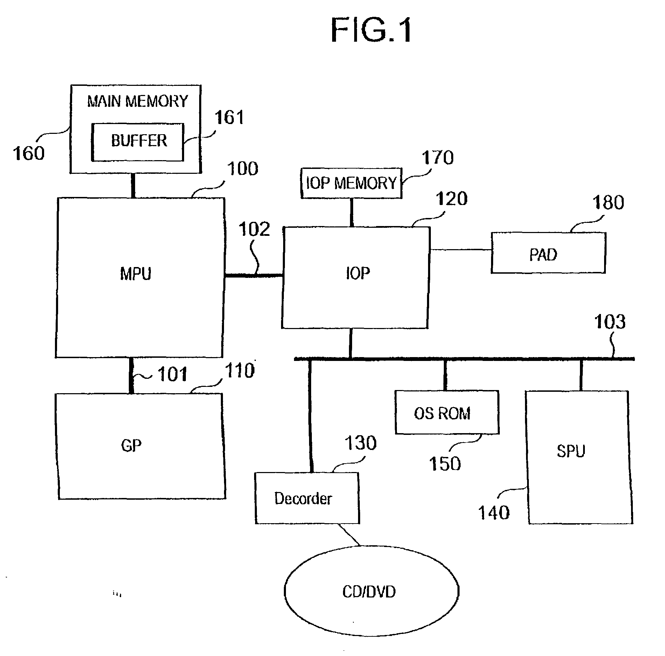

Fig. 1 is a block diagram showing the configuration of the entertainment system to which the present invention is applied.

As shown in Fig. 1, the entertainment system is a computer system and includes an MPU 100, a GP 110, an IOP 120, a CD/CVD decoder 130, an SPU 140, an OSROM 150, a main memory 160, and an IOP memory 170.

The MPU 100 and the GP 110 are connected by a dedicated bus 101, while the MPU 100 and the IOP 120 are connected by a bus 102. The IOP 120, the CD/DVD decoder 130, the SPU 140 and the OSROM 150 are connected to a bus 103.

The MPU 100 is connected with the main memory 160, and the IOP 120 is connected with the IOP memory 170. The IOP 120 is connected with a controller (PAD) 180.

The MPU 100 is a main CPU for the entertainment system. The MPU 100 executes a program stored in the OSROM 150 or a program loaded to the main memory 160 from the CD or DVD to perform a prescribed processing,

The GP 110 is a graphics processor carrying out a rendering function in the entertainment system. The GP 110 performs a drawing processing in response to an instruction from the MPU 100.

The IOP 120 is an input/output sub processor for controlling data exchange between the MPU 100 and peripherals (such as the CD/DVD decoder 130 and the SPU140).

The CD/DVD decoder 130 reads data from a CD or DVD mounted in the drive, and transfers the data to the main memory 160.

The SPU 140 is a sound reproducing processor, and reproduces sound data (such as PCM data) stored in a sound buffer (not shown) at a prescribed sampling frequency in response to a sound emission instruction from the MPU 100.

The OSROM 150 is a ROM storing programs to be executed by the MPU 100 or the IOP 120 at the time of activation and the like.

The main memory 160 is a main memory for the MPU 100, and 'stores instructions to be executed by the MPU 100 and data to be used by the MPU 100. The main memory 160 is provided with a buffer 161 used for reproducing sound data. The buffer 161 has for example a size of 500 KB.

The IOP memory 170 is a main memory for the IOP 120, and stores instructions to be executed by the IOP 120 or data to be used by the IOP 120.

The controller (PAD) 180 is an interface device for transferring the player's intention to an application or the like during a game he/she plays.

A sound data reproducing processing with an application executed by the entertainment system having the above-described configuration will be now described.

Herein, the application reproduces sound data (stream data) stored in a CD/DVD as required. The sound data is for example PCM data having a size of about 40 MB.

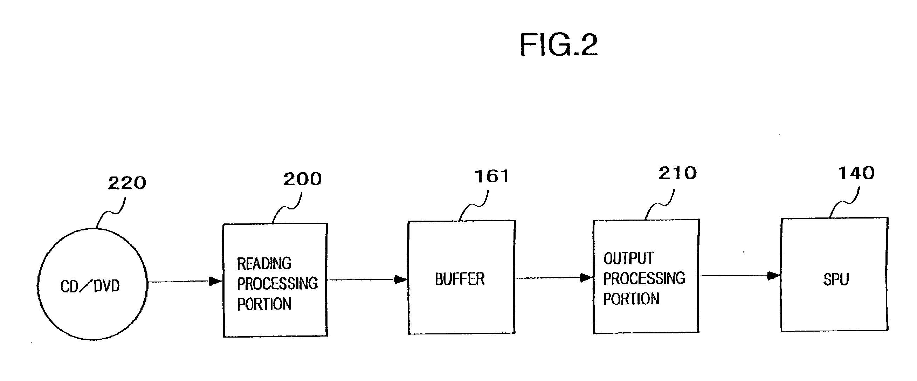

Fig. 2 is a diagram briefly showing how sound data is reproduced in the entertainment system. As shown, the sound data reproducing processing in the entertainment system is implemented by the reading processing portion 200 and the output processing portion 210.

More specifically, when sound data is reproduced in the entertainment system, the reading processing portion 200 sequentially reads the sound data stored in a CD/DVD 220 to the buffer 161 on the main memory 160, while the output processing portion 210 sequentially transfers the sound data read out to the buffer 161 to the SPU 140 so that the sound data is reproduced.

More specifically, the sound data reproduction is achieved by executing in parallel the processing of reading out the sound data from the CD/DVD 220 to the buffer 161, and the processing of transferring the data from the buffer 161 to the sound buffer in the SPU 140 by the MPU 100.

The processing by the reading processing portion 200 will be now described.

The reading processing portion 200 reads out sound data from a CD/DVD according to a previously provided branch definition file.

The branch definition file is prepared, for example, by the producer of the application. The producer of the application sets a branch point or a branch destination point at a portion serving as a pause between phrases in music, and specifies positional information on the branch point or the branch destination point in the branch definition file. The reading processing portion 200 moves the reading position to the specified branch destination point when the sound data has been read to the branch point specified in the branch definition file. Also in the branch definition file, the number of times to branch can be specified as a condition for branching at the branch point, and the producer of the application can specify a desired number of times to branch to achieve a specified number of loops.

The branch definition file is stored in the CD/DVD, The branch definition file is read out from the CD/DVD to the main memory 160 for use.

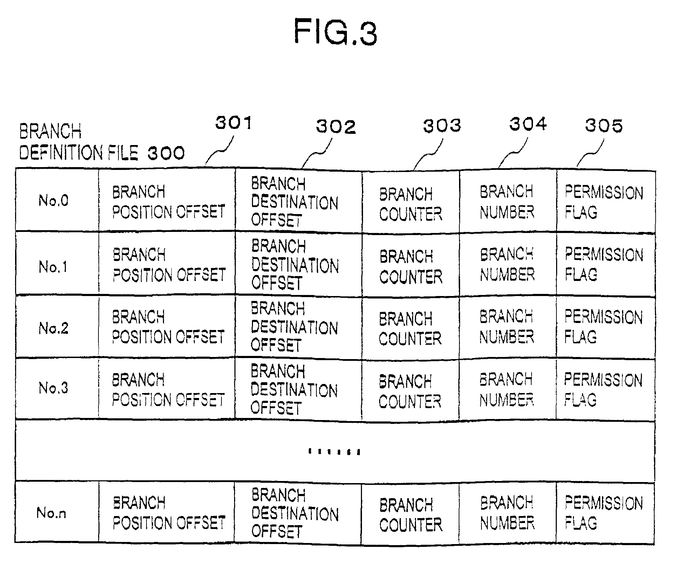

Fig. 3 shows an example of the architecture of a branch definition file.

As shown in Fig. 3, the branch definition file 300 has a branch position offset 301, a branch destination offset 302, a branch counter 303, a branch number 304, and a permission flag 305, and 301 to 305 may each be provided in multiple sets.

The branch position offset 301 is data representing a position to branch, and for example a byte address at the branch position counted from the head of the sound data is stored therein.

The branch destination offset 302 is data representing the position to start reading after the execution of a branch, and for example a byte address at the branch destination counted from the head of the sound data is stored therein.

The branch number 304 is data representing the number of times to branch at a corresponding branch position.

The branch counter 303 is a counter for counting the number of branches actually executed, and branching is repeated until the counter value reaches a value specified for the branch number 304. The branch counter 303 is initialized to 0, for example, and incremented by the reading processing portion 200 at the time of branching.

The permission flag 305 is a flag used to control whether or not to actually branch at a branch position. An application can control branching in real time by changing the permission flag 305.

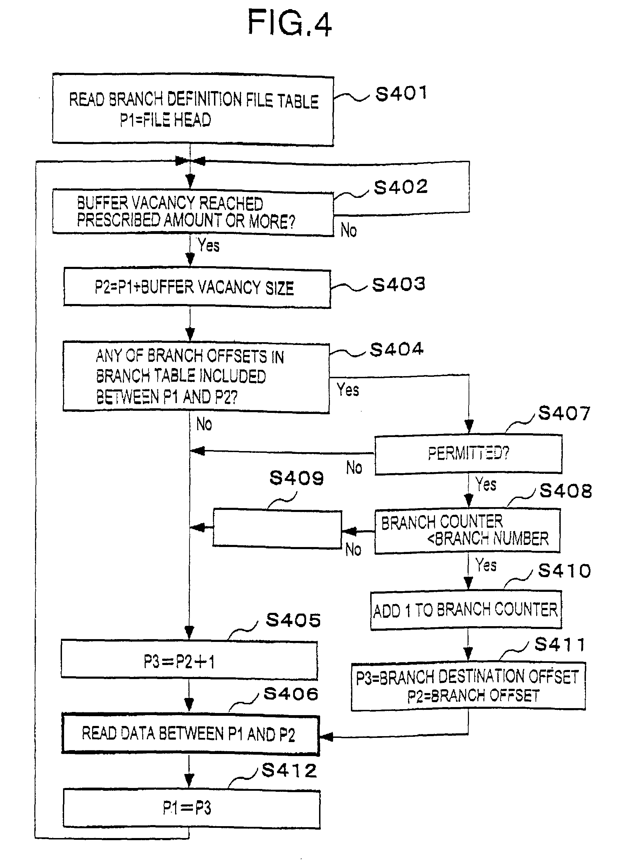

Fig. 4 is a flow chart for use in illustration of the process flow by the reading processing portion 200.

In response to an instruction to read sound data from the application, the branch definition file 300 is read onto the main memory 160 from the CD/DVD (S401).

A pointer P1 indicating the reading start position is initialized to point the head of the file storing the sound data.

Then, it is determined whether or not the vacancy in the buffer 161 has reached a prescribed amount or more (S402). As described above, in parallel with the reading processing to the buffer 161, the output processing from the buffer 161 to the SPU 140 is performed. Therefore, the sound data read out from the CD/DVD is sequentially transferred to the SPU 140.

If the result of determination is that the vacancy has not reached the prescribed amount or more (S402: No), the control waits until more data in the buffer 161 is output by the output processing portion 210 and the prescribed amount of vacancy is created in the buffer 161.

Once the vacancy in the buffer 161 has reached the prescribed amount or more (S402: Yes), a pointer P2 indicating the reading end position is set to "P1+buffer vacancy size" (S403).

Then, it is determined whether or not the branch position offset 301 specified in the branch definition file 300 is included between P1 and P2 (S404).

If the result of the determination is that no branch position is present between P1 and P2 (S404: No), a pointer P3 indicating the next reading start position is substituted with "P2+1" (S405), and the data between P1 and P2 is read onto the buffer 161 (3406).

If the branch position offset 301 specified in the branch definition file 300 is included between P1 and P2 (S404: Yes), a corresponding permission flag 305 is checked to determine whether or not branching is permitted (S407),

If the result is that branching is not permitted (S407 : No), branching is not performed and therefore, similarly to the case without a branch position between P1 and P2 as described above, the pointer P3 indicating the next reading start position is substituted with "P2+1" (S405), and the data between P1 and P2 is read onto the buffer 161 (S406).

Meanwhile, if branching is permitted (S407: Yes), it is determined whether or not the value of a corresponding branch counter 303 is smaller than a value specified for a corresponding branch number 304 (S408). As a result, if the value of the branch counter 303 is equal to or more than the specified branch number (S408: No), which means that the specified number of branches have been completed, the branch counter 303 is reset without branching (S409). Then, similarly to the case without a branch position between P1 and P2 as described above, the pointer P3 indicating the next reading start position is substituted with "P2+1" (S405), and the data between P1 and P2 is read onto the buffer 161 (S406).

Meanwhile, if the value of the branch counter 303 is smaller than the specified branch number (S408 : Yes), The value of the branch counter 303 is incremented by 1 to branch. The pointer P3 indicating the next reading start position is substituted with a corresponding branch destination offset 302, while the pointer P2 indicating the present reading end position is substituted with the branch position offset 301 (S411). The data between P1 and P2, in other words, the data between the present reading start position and the branch position, is read onto the buffer 161 (S406).

If data is thus read to the buffer 161, the next reading is started, and the value of the pointer P3 indicating the next reading start position is substituted into the pointer P1 indicating the reading start position (S412), and the control returns to the processing of waiting for the vacancy in the buffer 161 to reach the prescribed amount or more (S402). Then, until reading of the necessary sound data is completed, the above described processing is repeated.

By the above described processing, the sound data may be read out according to the branch information specified in the branch definition file 300.

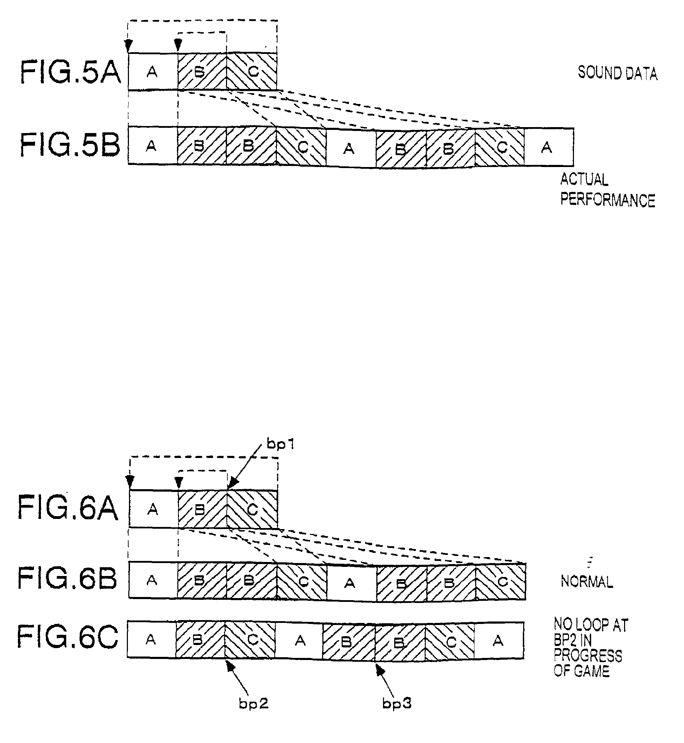

Figs. 5A and 5B are diagrams for use in illustration of the relation between sound data and actual performance when branching is employed. When the data is set as below described, the performance shown in Fig. 5B can be achieved. As shown in Fig. 5A, sound data consisting only of "A", "B" and "C" is prepared. The data in the branch definition file 300 shows that a branch is executed to the head of "B" after processing to the end of "B" and two (or more) branches are executed to the head of "A" after processing to the end of "C".

As described above, by the data reading processing according to the embodiment, sound data is read out according to the branch definition file 300; therefore, the order of reading the sound data can be controlled, and for the sound data in which the same phrase is repeated a number of times, the overlap can be reduced using branching. Therefore, the capacity of the recording medium such as the CD/DVD etc. storing the sound data may be significantly saved.

Furthermore, since the permission flag 305 is provided in the branch definition file 300, whether or not to branch can be dynamically controlled, so that performance of a different arrangement may be provided depending on how a game or the like proceeds.

Figs. 6A to 6C are diagrams showing a case in which whether or not to branch is controlled based on the progress of a game by way of illustration,

In a normal manner, at bpl in Fig. 6A, one branch is executed to the head of "B", and as shown in Fig. 6B, "B" is read out twice; if, however, the permission flag 305 is changed to a non-permission state before whether or not to branch at bp1 is determined, no branch is executed at the position of bp2 as shown in Fig. 6C, and "C" is directly read out. Then, when the permission flag 305 is changed to a permission state, a branch is executed at bp3, and "B" is read out twice.

Thus, according to the embodiment, the permission flag 305 may be changed to dynamically control whether or not to branch, so that in an application such as a game, the actual order of playing each phrase can be changed depending upon the progress of the application.

Now, the case of enabling an application to perform a prescribed action in synchronization with a sound thus reproduced will be described.

As described above, sound data read out onto the buffer 161 is sequentially transferred to the SPU 140 by the output processing portion 210 for performance.

The entertainment system can notify the application of occurrence of an event when the performance proceeds to a specific position during reproducing sound data.

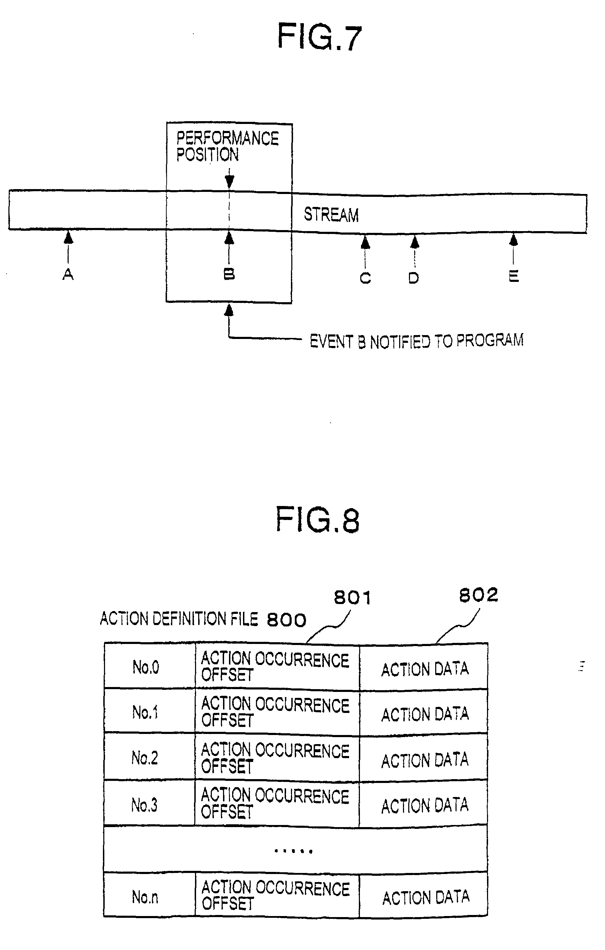

Fig. 7 is a diagram for use in illustration of such a function. In the entertainment system, sound data is sequentially reproduced and when the data has been reproduced up to a mark position. (A to E in Fig. 7) previously specified in an action definition file, the application is notified of occurrence of the event.

In order to achieve this function, in the entertainment system, a sound reproduction monitoring processing is activated at the time of reproducing sound data. The sound reproduction monitoring processing is performed in parallel by the MPU 100 similarly to the reading processing from the CD/DVD to the buffer 161 and the output processing from the buffer 161 to the SPU 140 described above.

In the sound reproduction monitoring processing, the sound reproduction state is monitored, and when the sound has been reproduced up to a mark position specified in the action definition file, the application is notified of occurrence of the event. The action definition file is previously provided by the producer of the application similarly to the branch definition file. The producer of the application registers positions desired to cause an action by the application in synchronization with the stream in the action definition file.

The action definition file is stored in a CD/DVD. The action definition file. is read out from the CD/DVD to the main memory 160 for use.

Fig. 8 is a diagram showing an example of the architecture of an action definition file.

As shown in Fig. 8, the action definition file 800 has an action occurrence offset 801, and action data 802, and the action occurrence offset 801 and the action data 802 may each be provided in multiple sets.

The action occurrence offset 801 is data indicating a position (mark position) to cause an action, and, for example, a byte address at the position to cause an action counted from the head of the sound data is specified.

The action data 802 is data to be transferred to the application to notify that the sound data has been reproduced to the position specified by the action occurrence offset 801. The application can execute some effect (such as lip sync) according to the application data, and execute an action in complete synchronization with the stream.

Fig. 9 is a flow chart for use in illustration of the flow of the sound reproduction monitoring processing.

As shown in Fig. 9, when the sound reproduction monitoring processing is activated, the action definition file 800 is read out onto the main memory 160 from the CD/DVD (S901).

The pointer P1 indicating the start position of a region to be monitored is initialized to a value indicating the head of stream data.

The pointer P2 indicating the end position of the region to be monitored is substituted with the present stream using position (S902). The present stream using position is available by referring to a specific register in the SPU 140.

It is then determined whether or not the action occurrence offset 801 specified in the action definition file 800 is included between P1 and P2 (S903).

As a result, if there is no action occurrence position between P1 and P2 (S903: No), the pointer P1 indicating the start position of the region to be monitored is substituted with the value of the pointer P2 indicating the end position of the present region to be monitored in order to determine the next region to be monitored (S904), and the above-described processing is repeated.

Meanwhile, if the action occurrence offset 801 specified in the action definition file 800 is included between P1 and P2 (S903: Yes), the application is notified of corresponding action data 802 (S905).

Then, in order to determine the next region to be monitored, the pointer P1 indicating the start position of the region to be monitored is substituted with a value produced by adding 1 to the action occurrence offset 801 (S906), and the above-describe processing is repeated.

As in the foregoing, in the sound reproduction monitoring processing, the position of sound data actually reproduced by the SPU 140 is monitored, and when the sound data performance has reached to a previously specified mark position, the application is notified of occurrence of the event. Therefore, the application can readily implement the processing in complete synchronization with the sound *data* reproduction. As a result, if CD/DVD cannot be smoothly read and a stream is delayed, an action in complete synchronization with sound reproduction can be achieved.

Note that in the foregoing, the sound data reproducing processing is described, while the present invention is not limited to the processing of the sound data and can be applied to the processing of reproducing other stream data (such as video data).

As detailed above, according to the present invention, the order of reading stream data can be controlled, so that the amount of the stream data itself can be reduced.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A stream data reproducing apparatus reading out stream data stored in a recording medium and reproducing the data, comprising:
a reading processing portion for reading out the stream data stored in the recording medium;
a reproduction processing portion for reproducing the read out stream data; and
a monitoring processing portion for monitoring the reproduction of the stream data,
wherein,
upon detecting that stream data corresponding to an action position specified in action definition information stored in the recording medium is reproduced, the monitoring processing pcrtion notifying an application of the detection.

2. The stream data reproducing apparatus according to claim 1, wherein
the action definition information has data to be transferred to the application at the time of notifying the application of the reproduction of the stream data corresponding to the action position

3. The stream data reproducing apparatus according to claim 1, wherein
the recording medium is a portable recording medium.

4. The stream data reproducing apparatus according to claim 2, wherein
the recording medium is a portable recording medium.

5. A method of reproducing stream data according to which stream data stored in a recording medium is read out and reproduced, comprising the steps of:
reading out action definition information from the recording medium;
reading out the stream data from the recording medium and reproducing the data; and
monitoring the reproduction of the stream data, and upon detecting that stream data corresponding to an action position specified in the action definition information is reproduced, notifying an application of the detection.

6. A recording medium recorded with a stream data reproducing program, the stream data reproducing program enabling a processing comprising the steps of:
reading out action definition information from the recording medium;
reading out stream data from the recording medium;
reproducing the read out stream data; and
monitoring the reproduction of the stream data, and upon detecting that stream data corresponding to an action position specified in the action definition information is reproduced, notifying an application of the detection.

7. A stream data reproducing program, comprising the steps of:
reading out action definition information from a recording medium;
reading out stream data from the recording medium;
reproducing the read out stream data; and
monitoring the reproduction of the stream data, and upon detecting that stream data corresponding to an action position specified in the action definition information is reproduced, notifying an application of the detection.

8. A recording medium recorded with:
stream data;
action definition information to specify an action position desired to cause an action by an application in synchronization with the reproduction of the stream data; and
a stream data reproducing program to allow the stream data to be read out and reproduced while monitoring the reproduction and upon detecting that stream data corresponding to the action position is reproduced, notifying the application of the detection.
